# EUROPÄISCHE PATENTSCHRIFT

(11) **EP 2 186 703 B1**
(45) Veröffentlichungstag und Bekanntmachung des Hinweises auf die Patenterteilung: **31.07.2013**
(21) Anmeldenummer: 09175119.8
(22) Anmeldetag: 05.11.2009
(51) Int. Cl.: B60W 10/08

(54) **Verfahren zum Betreiben eines Antriebsstrang**
Method for operating a drive train
Procédé destiné au fonctionnement d'une chaîne cinématique

(30) Priorität: 14.11.2008 DE 102008043733
(43) Veröffentlichungstag der Anmeldung: 19.05.2010
(73) Patentinhaber: ZF Friedrichshafen AG, 88038 Friedrichshafen (DE)
(72) Erfinder: Kaltenbach, Johannes, 88048, Friedrichshafen (DE); Mittelberger, Christian, 88214, Ravensburg (DE); Er, Mesut, 88045, Friedrichshafen (DE)

(56) Entgegenhaltungen:
- DE-A1- 10 008 344
- DE-A1- 19 849 156

## Beschreibung

Die Erfindung betrifft ein Verfahren zum Betreiben eines zumindest ein Getriebe und einen Hybridantrieb umfassenden Antriebsstrangs eines Kraftfahrzeugs nach dem Oberbegriff des Anspruchs 1.

Die Hauptkomponenten eines Antriebsstrangs eines Kraftfahrzeugs sind ein Antriebsaggregat und ein Getriebe. Ein Getriebe wandelt Drehmomente und Drehzahlen und setzt so das Zugkraftangebot des Antriebsaggregats um. Die hier vorliegende Erfindung betrifft ein Verfahren zum Betreiben eines Antriebsstrangs, der zumindest ein Getriebe und als Antriebsaggregat einen Hybridantrieb mit einem Verbrennungsmotor und einer als Elektromotor und/oder Generator betreibbaren Elektromaschine umfasst.

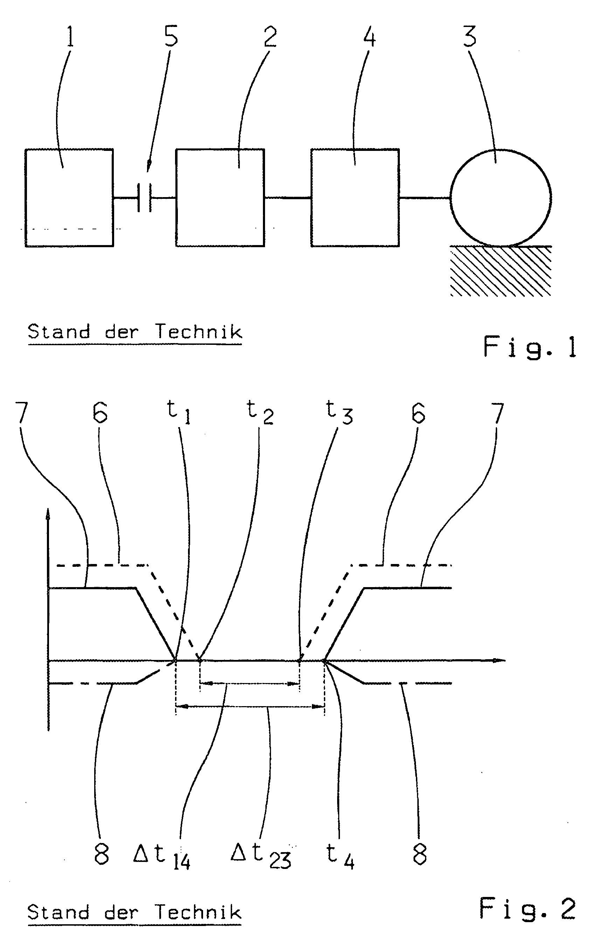

Fig. 1 zeigt ein Antriebsstrangschema eines aus dem Stand der Technik bekannten Antriebsstrangs mit einem Hybridantrieb, der einen Verbrennungsmotor 1 und eine Elektromaschine 2 umfasst, wobei zwischen der Elektromaschine 2 des Hybridantriebs und einen Abtrieb 3 des Antriebsstrangs ein Getriebe 4 geschaltet ist. Beim Getriebe 4 handelt es sich um ein automatisches Schaltgetriebe, in welchem Gangwechsel bzw. Schaltungen vorzugsweise mit Zugkraftunterbrechung durchgeführt werden. Zwischen den Verbrennungsmotor 1 und der Elektromaschine 2 des Hybridantriebs ist eine Kupplung 5 geschaltet, die bei rein elektromotorischer Fahrt zur Abkopplung des Verbrennungsmotors 1 vom Abtrieb 3 geöffnet ist. Typischerweise umfasst ein solcher Antriebsstrang weiterhin entweder ein nicht gezeigtes getriebeinternes Anfahrelement oder ein nicht gezeigtes getriebeexternes Anfahrelement. Ein solcher Antriebsstrang wird auch als Parallelhybrid-Antriebsstrang bezeichnet.
Fig. 2 zeigt ein Diagramm, welches die aus dem Stand der Technik bekannte Vorgehensweise bei der Ausführung einer Schaltung an dem in Fig. 1 gezeigten Antriebsstrang verdeutlicht.

So sind in Fig. 2 über der Zeit t drei zeitliche Momentverläufe gezeigt, nämlich in gestrichelter Darstellung ein zeitlicher Momentverlauf 6 eines von der zwischen den Verbrennungsmotor 1 und der Elektromaschine 2 geschalteten Kupplung 5 übertragbaren Moments, in durchgezogener Linienführung ein zeitlicher Momentverlauf 7 eines vom Verbrennungsmotor 1 bereitgestellten Moments, und in strichpunktierter Linienführung ein zeitlicher Momentverlauf 8 eines von der Elektromaschine 2 bereitgestellten Moments, und zwar jeweils bei Ausführung eines Gangwechsels in Form einer Zugschaltung bei generatorisch betriebener Elektromaschine 2.

So kann Fig. 2 entnommen werden, dass zur Ausführung einer Schaltung im automatischen Schaltgetriebe 4 bei zuvor geschlossener Kupplung 5 zunächst ein Lastabbau am Verbrennungsmotor 1 (siehe Momentverlauf 7) und ein gleichzeitiger Lastabbau an der Elektromaschine 2 (siehe Signalverlauf 8) erfolgt, wobei darüber hinaus gemäß dem Signalverlauf 6 auch das von der Kupplung 5 übertragbare Moment abgebaut wird. Dabei erreichen gemäß Fig. 2 die vom Verbrennungsmotor 1 bereitgestellte Last bzw. das vom Verbrennungsmotor 1 bereitgestellte Moment und die von der Elektromaschine 2 bereitgestellte Last bzw. das von der Elektromaschine 2 bereitgestellte Moment jeweils zum Zeitpunkt t₁ einen Wert von Null, wobei das von der Kupplung 5 übertragbare Moment erst später zum Zeitpunkt t₂ Null beträgt. Nach dem Stand der Technik erfolgt demnach das Öffnen der Kupplung 5 zum Zeitpunkt t₂ zeitverzögert zum Lastabbau am Verbrennungsmotor 1 sowie an der Elektromaschine 2, wobei zwischen den Zeitpunkten t₂ und t₃ im automatischen Schaltgetriebe 4 ein Gangwechsel ausgeführt wird. Zum Zeitpunkt t₃ ist der Gangwechsel im Getriebe 4 abgeschlossen, wobei zum Zeitpunkt t₃ das von der Kupplung 5 übertragbare Moment (siehe Signalverlauf 6) wieder aufgebaut wird. Zeitlich verzögert hierzu beginnend mit dem Zeitpunkt t₄ werden gemäß den Signalverläufen 7 und 8 auch wieder die Lasten bzw. Momente am brennungsmotor 1 (siehe Signalverlauf 7) und an der Elektromaschine 2 (siehe Signalverlauf 8) aufgebaut.

Bei der aus dem Stand der Technik bekannten Vorgehensweise der Fig. 2 zum Betreiben eines Parallelhybrid-Antriebsstrangs mit automatischem Schaltgetriebe 4 wird demnach die Schaltung im Schaltgetriebe 4 während der Zeitspanne Δt₂₃ durchgeführt, die Dauer einer Zugkraftunterbrechung am Abtrieb 3 entspricht jedoch der Zeitspanne Δt₄. Die Dauer der Zugkraftunterbrechung Δt₄ umfast demnach die Dauer Δt₂₃ für den Gangwechsel im automatischen Schaltgetriebe 4 zuzüglich der Dauer bis die Kupplung 5 nach dem Lastabbau am Verbrennungsmotor 1 und an der Elektromaschine 2 im Zeitpunkt t₁ zum Zeitpunkt t₂ geöffnet werden kann, sowie zuzüglich der Zeitdauer, bis die Kupplung 5 nach Ausführung der Schaltung im Zeitpunkt t₃ ein Moment übertragen kann und zum Zeitpunkt t₄ am Verbrennungsmotor ein Moment aufgebaut ist.

Die DE 10 008 344 A1 betrifft ein Verfahren gemäβ dem Oberbegriff des Anspruchs 1.

Ausgehend von diesem Stand der Technik besteht Bedarf an einem Verfahren zum Betreiben eines Antriebsstrangs mit einem Hybridantrieb und einem automatischen Schaltgetriebe, bei welchem die Zugkraftunterbrechung am Abtrieb verkürzt werden kann.

Hiervon ausgehend liegt der vorliegenden Erfindung das Problem zu Grunde, ein neuartiges Verfahren zum Betreiben eines ein Getriebe und einen Hybridantrieb umfassenden Antriebsstrangs zu schaffen. Dieses Problem wird durch ein Verfahren gemäß Anspruch 1 gelöst.

Mit dem erfindungsgemäßen Verfahren zum Betreiben eines Antriebsstrangs kann die Dauer der Zugkraftunterbrechung am Abtrieb verkürzt werden.

Ein weiterer Vorteil des erfindungsgemäßen Verfahrens besteht darin, dass sich Ungenauigkeiten im Kupplungsmoment der zwischen den Verbrennungsmotor und der Elektromaschine des Hybridantriebs geschalteten Kupplung weniger stark auf den Schaltungskomfort auswirken.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein aus dem Stand der Technik bekanntes Antriebsstrangsche- ma eines Kraftfahrzeugs, bei welchem das erfindungsgemäße Verfahren einsetzbar ist; und
- Fig. 2: ein Diagramm zur Verdeutlichung eines aus dem Stand der Technik bekannten Verfahrens zum Betreiben des Antriebs- strangs der Fig. 1; und
- Fig. 3:: ein Diagramm zur Verdeutlichung des erfindungsgemäßen Ver- fahrens zum Betreiben des Antriebsstrangs der Fig. 1.

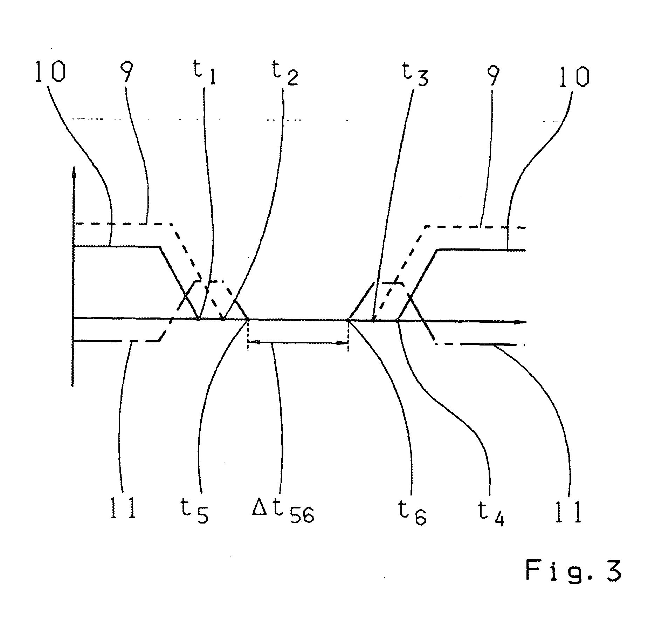

Fig. 3 zeigt ein Diagramm zur Verdeutlichung des erfindungsgemäßen Verfahrens zum Betreiben des in Fig. 1 gezeigten Parallelhybrid-Antriebsstrangs, dessen Getriebe 4 als automatisches Schaltgetriebe ausgeführt ist, welches Schaltungen bzw. Gangwechsel vorzugsweise mit Zugkraftunterbrechung ausführt.

So sind in Fig. 3 über der Zeit t wiederum drei zeitliche Momentverläufe gezeigt, nämlich in gestrichelter Linienführung ein zeitlicher Momentverlauf 9 des von der zwischen den Verbrennungsmotor 1 und die Elektromaschine 2 geschalteten Kupplung 5 übertragbaren Moments, in durchgezogener Linienführung ein zeitlicher Momentverlauf 10 eines vom Verbrennungsmotor 1 bereitgestellten Moments und in strichpunktierter Linienführung ein zeitlicher Momentverlauf 11 eines von der Elektromaschine 2 bereitgestellten Moments, wobei Fig. 3 wiederum den Fall einer Zugschaltung betrifft.

Gemäß Fig. 3 wird vor Ausführung einer Schaltung im automatischen Schaltgetriebe 4 wiederum gemäß dem Momentverlauf 10 das vom Verbrennungsmotor 1 bereitgestellte Moment reduziert, bis dieses zum Zeitpunkt t₁ Null beträgt. Ebenfalls wird das von der Kupplung 5 übertragbare Moment (siehe Signalverlauf 9) reduziert, wobei dieses zeitverzögert im Zeitpunkt t₂ Null beträgt, wobei im Zeitpunkt t₂ die Kupplung 5 öffnet.

Ebenso wird nach Ausführung einer Schaltung im automatischen Schaltgetriebe 4 im Zeitpunkt t₃ das von der Kupplung 5 übertragbare Moment (siehe Signalverlauf 9) wieder erhöht, zeitversetzt hierzu wird beginnend mit dem Zeitpunkt t₄ auch das vom Verbrennungsmotor 1 (siehe Signalverlauf 10) bereitgestellte Moment wieder erhöht.

Im Sinne der Erfindung wird vor Ausführung eines Gangwechsels im automatischen Schaltgetriebe 4 und/oder nach Ausführung eines Gangwechsels im automatischen Schaltgetriebe 4 eine Lastübernahme durch die Elektromaschine 2 durchgeführt, wobei dies gemäß Fig. 3 sowohl vor Ausführung des Gangwechsels als auch nach Ausführung des Gangwechsels erfolgt.

So ergibt sich aus den Momentverläufen 11 des von der Elektromaschine 2 bereitgestellten Moments, dass in Fig. 3 sowohl vor Ausführung des Gangwechsels als auch nach Ausführung des Gangwechsels die Elektromaschine 2 eine Lastübernahme realisiert.

So kann Fig. 3 entnommen werden, dass die Lastübernahme durch die Elektromaschine 2 vor Ausführung des Gangwechsels derart erfolgt, dass nach dem Lastabbau am Verbrennungsmotor 1 zum Zeitpunkt t₁ sowie nach dem Abbau des von der Kupplung 5 übertragbaren Moments zum Zeitpunkt t₂ die Elektromaschine jeweils ein Moment bereitstellt, welches das gleiche Vorzeichen aufweist, wie das zuvor abgebaute Moment des Verbrennungsmotors 1.

Ebenso erfolgt die Lastübernahme durch die Elektromaschine 2 nach Ausführung eines Gangwechsels derart, dass vor dem Lastaufbau am Verbrennungsmotor 1 zum Zeitpunkt t₄ sowie vor dem Aufbau des von der Kupplung 5 übertragbaren Moments zum Zeitpunkt t₃ die Elektromaschine 2 ein Moment bereitstellt, weiches das gleiche Vorzeichen wie das noch aufzubauende Moment des Verbrennungsmotors 1 aufweist.

So beträgt vor Ausführung eines Gangwechsels erst zum Zeitpunkt t₅ das von der Elektromaschine 2 am Abtrieb bereitgestellte Moment Null Weiterhin beträgt nach Ausführung eines Gangwechsels nur bis zum Zeitpunkt t₆ das am Abtrieb bereitgestellte Moment Null, sodass die Dauer der Zugkraftunterbrechung, also auf die Dauer der Ausführung der Schaltung im automatischen Schaltgetriebe 4, beschränkt ist.

In Fig. 3 entspricht die Dauer der Ausführung einer Schaltung im automatischen Schaltgetriebe 4 demnach der Dauer der Zugkraftunterbrechung, die jeweils durch die Zeitspanne Δt₅₆ gekennzeichnet sind.

Es liegt demnach im Sinne der hier vorliegenden Erfindung vor Ausführung der eigentlichen Schaltung im automatischen Schaltgetriebe 4 und/oder nach Ausführung der eigentlichen Schaltung Im automatischen Schaltgetriebe 4 eine Lastübernahme vom Verbrennungsmotor 1 auf die Elektromaschine 2 durchzuführen. Diese Lastübernahme ist begrenzt durch die Leistungsfähigkeit der Elektromaschine 2 sowie eines elektrischen Energiespeichers des Antriebsstrangs. Abhängig von der Dimensionierung der Elektromaschine 2 sowie des Energiespeichers führt dies in den meisten Fällen zwar zu einer Reduzierung der Zugkraft am Abrieb, jedoch nicht zu einer kompletten Zugkraftunterbrechung vor und/oder nach Ausführung der eigentlichen Schaltung im automatischen Schaltgetriebe 4.

Da der Lastabbau am Verbrennungsmotor 1 vor Ausführung der Schaltung und das Öffnen der Kupplung 5 nicht mehr zeitkritisch sind, kann der Schaltungskomfort erhöht werden.

Das Ausführen der eigentlichen Schaltung im automatischen Schaltgetriebe 4 erfolgt mit Zugkraftunterbrechung und aktiver Synchronisation durch Veränderung des von der Elektromaschine 2 bereitgestellten Moments. Die Dauer der Zugkraftunterbrechung am Abtrieb 3 ist auf die Dauer der Ausführung der Schaltung im automatischen Schaltgetriebe 4 beschränkt.

Obwohl im Ausführungsbeispiel der Fig. 3 die Lastübernahme durch die Elektromaschine 2 sowohl vor Ausführung der Schaltung als auch nach Ausführung der Schaltung im automatischen Schaltgetriebe 4 erfolgt, ist dies unabhängig voneinander möglich. Es ist also möglich, ausschließlich vor Ausführung der Schaltung im automatischen Schaltgetriebe 4 als auch ausschließlich nach Ausführung der Schaltung im automatischen Schaltgetriebe 4 die Lastübernahme durch die Elektromaschine 2 zu nutzen.

Nach einer vorteilhaften Weiterbildung der hier vorliegenden Erfindung wird im Zusammenhang mit dem erfindungsgemäßen Verfahren ein Ladezustand des elektrischen Energiespeichers des Hybridantriebsstrangs überwacht, wobei nur dann, wenn der Ladezustand des elektrischen Energiespeichers größer als ein Grenzwert ist, vor Ausführung des Gangwechsels und/oder nach Ausführung des Gangwechsels eine Lastübernahme durch die Elektromaschine 2 erfolgt. Hierbei wird diejenige Energie berücksichtigt, die bei Ausführung des Gangwechsels im automatischen Schaltgetriebe 4 zur Synchronisation durch die Elektromaschine 2 benötigt wird. Ist der Energiezustand des elektrischen Energiespeichers kleiner als der Grenzwert, so erfolgt vor Ausführung des Gangwechsels und nach Ausführung des Gangwechsels keine Lastübernahme durch die Elektromaschine 2, da dann die im Energiespeicher gespeicherte Energie hierzu nicht ausreichend ist.

In diesem Zusammenhang kann vorgesehen werden, dass ein Energiemanagement des Antriebsstrangs dafür sorgt, dass im Energiespeicher stets genügend Energiereserve vorhanden ist, um eine Lastübernahme durch die Elektromaschine vor und/oder nach Ausführung einer Schaltung zu gewährleisten.

Im gezeigten Ausführungsbeispiel der Fig. 3 liegt der Zeitpunkt t₅, in welchem vor Ausführung einer Schaltung das Abtriebsmoment Null beträgt, nach dem Zeitpunkt t₂, zu welchem die Kupplung 5 öffnet. Daraus folgt, dass der Zeitpunkt der Ausführung einer Schaltung gegenüber dem Stand der Technik gemäß Fig. 2 um die Zeitspanne zwischen den Zeitpunkten t₂ und t₅ verzögert wird. Durch entsprechende Auslegung der Lastübernahme durch die Elektromaschine 2 können jedoch auch die Zeitpunkte t₂ und t₅ sowie gegebenenfalls die Zeitpunkte t₆ sowie t₃ zusammenfallen.

Nach einer weiteren vorteilhaften Weiterbildung der Erfindung kann vorgesehen sein, dass dann, wenn der Zeitpunkt t₅ nach dem Zeitpunkt t₂ liegt, ein Fahrerwunsch überwacht wird, und dass nur dann, wenn keine sportlichen oder spontanen Gangwechsel gewünscht werden, vor Ausführung eines Gangwechsels und/oder nach Ausführung eines Gangwechsels eine Lastübernahme durch die Elektromaschine gemäß Fig. 3 erfolgt. Werden hingegen sportliche oder spontane Gangwechsel gewünscht, so erfolgt vor Ausführung eines Gangwechsels oder nach Ausführung eines Gangwechsels keine Lastübernahme durch die Elektromaschine 2, sondern vielmehr die Ausführung einer konventionellen Schaltung im Sinne der Fig. 2.

Das erfindungsgemäße Verfahren ist bei Zugschaltungen und Schubschaltungen einsetzbar.

### Bezugszeichen

- 1: Verbrennungsmotor
- 2: Elektromaschine
- 3: Abtrieb
- 4: Getriebe
- 5: Kupplung
- 6: Momentverlauf
- 7: Momentverlauf
- 8: Momentverlauf
- 9: Momentverlauf
- 10: Momentverlauf
- 11: Momentverlauf

## Patentansprüche

1. Verfahren zum Betreiben eines Antriebsstrangs eines Kraftfahrzeugs, wobei der Antriebsstrang zumindest einen Hybridantrieb mit einem Verbrennungsmotor und einem Elektromotor, eine zwischen den Verbrennungsmotor und den Elektromotor geschaltete Kupplung, und ein zwischen dem Hybridantrieb und einem Abtrieb angeordnetes automatisches Schaltgetriebe umfasst, wobei zur Ausführung einer Schaltung mit Zugkraftunterbrechung nach einem Lastabbau am Verbrennungsmotor und nach einem Abbau des von der zwischen den Verbrennungsmotor und den Elektromotor geschalteten Kupplung übertragbaren Moments die zwischen den Verbrennungsmotor und den Elektromotor geschaltete Kupplung geöffnet wird, anschließend vom automatischen Schaltgetriebe ein Gangwechsel mit aktiver Synchronisation durch Veränderung des vom Elektromotor bereitgestellten Moments ausgeführt wird und darauffolgend das von der zwischen den Verbrennungsmotor und den Elektromotor geschalteten Kupplung übertragbaren Moments erhöht, ein Lastaufbau am Verbrennungsmotor durchgeführt und gegebenenfalls die zwischen den Verbrennungsmotor und den Elektromotor geschaltete Kupplung geschlossen wird wobei vor Ausführung eines Gangwechsels im automatischen Schaltgetriebe und/oder nach Ausführung eines Gangwechsels im automatischen Schaltgetriebe eine Lastübemahme durch den Elektromotor durchgeführt wird, **dadurch gekennzeichnet**, däβ die Lastübernahme dann erfolgt, wenn ein überwachter Ladezustand eines elektrischen Energiespeichers des Antriebsstrangs größer als ein Grenzwert ist,
wobei für den Grenzwert die Energie berücksichtigt wird, die von der beim Gangwechsel im automatischen Schaltgetriebe auszuführenden Synchronisation durch den Elektromotor benötigt wird.

2. Verfahren nach Anspruch 1, **dadurch gekennzeichnet, dass** zur Lastübemahme durch den Elektromotor vor Ausführung eines Gangwechsels nach dem Lastabbau am Verbrennungsmotor der Elektromotor ein Moment bereitstellt, welches das gleiche Vorzeichen aufweist wie das zuvor abgebaute Moment des Verbrennungsmotors.

3. Verfahren nach Anspruch 2, **dadurch gekennzeichnet, dass** auch nach dem Abbau des von der Kupplung übertragbaren Moments der Elektromotor ein Moment bereitstellt, welches das gleiche Vorzeichen aufweist wie das zuvor abgebaute Moment des Verbrennungsmotors.

4. Verfahren nach einem der Ansprüche 1 bis 3, **dadurch gekennzeichnet, dass** zur Lastübemahme durch den Elektromotor nach Ausführung eines Gangwechsels vor dem Lastaufbau am Verbrennungsmotor der Elektromotor ein Moment bereitstellt, welches das gleiche Vorzeichen aufweist wie das noch aufzubauende Moment des Verbrennungsmotors.

5. Verfahren nach Anspruch 4, **dadurch gekennzeichnet, dass** auch vor Aufbau des von der Kupplung übertragbaren Moments der Elektromotor ein Moment bereitstellt, welches das gleiche Vorzeichen aufweist wie das noch aufzubauende Moment des Verbrennungsmotors.

6. Verfahren nach einem der Ansprüche 1 bis 5, **dadurch gekennzeichnet, dass** dass dann, wenn der Ladezustand des elektrischen Energiespeichers kleiner als der Grenzwert ist, vor Ausführung eines Gangwechsels und nach Ausführung eines Gangwechsels keine Lastübemahme durch den Elektromotor erfolgt.

7. Verfahren nach einem der Ansprüche 1 bis 6, **dadurch gekennzeichnet, dass** ein Fahrerwunsch überwacht wird, und dass nur dann, wenn keine sportlichen oder spontanen Gangwechsel gewünscht werden, vor Ausführung eines Gangwechsels und/oder nach Ausführung eines Gangwechsels eine Lastübemahme durch den Elektromotor erfolgt.

8. Verfahren nach einem der Ansprüche 1 bis 6, **dadurch gekennzeichnet, dass** dann, wenn sportliche oder spontane Gangwechsel gewünscht werden, vor Ausführung eines Gangwechsels und nach Ausführung eines Gangwechsels keine Lastübemahme durch den Elektromotor erfolgt.

## Claims

1. Method for operating a drive train of a motor vehicle, wherein the drive train comprises at least one hybrid drive with an internal combustion engine and an electric motor, a clutch positioned between the internal combustion engine and the electric motor, and an automatic shift transmission arranged between the hybrid drive and an output, wherein, in order to perform a shift with tractive force interruption after a reduction in load at the internal combustion engine and after a reduction in the torque which can be transmitted by the clutch positioned between the internal combustion engine and the electric motor, the clutch positioned between the internal combustion engine and the electric motor is opened, subsequently a gear change is performed by the automatic shift transmission with active synchronization by changing the torque provided by the electric motor and thereafter the torque which can be transmitted by the clutch positioned between the internal combustion engine and the electric motor is increased, a build-up of load at the internal combustion engine is carried out and optionally the clutch positioned between the internal combustion engine and the electric motor is closed, wherein, before performing a gear change in the automatic shift transmission and/or after carrying out a gear change in the automatic shift transmission, a transfer of load is carried out by the electric motor, **characterized in that** the transfer of load is carried out when a monitored charging state of an electric energy store of the drive train is greater than a threshold value, wherein the energy which is required by the synchronization to be performed during gear changing in the automatic shift transmission by the electric motor is taken into account for the threshold value.

2. Method according to Claim 1, **characterized in that** the electric motor provides a torque which has the same sign as the previously reduced torque of the internal combustion engine for the transfer of load by the electric motor before performing a gear change after the reduction in load at the internal combustion engine.

3. Method according to Claim 2, **characterized in that** the electric motor also provides a torque which has the same sign as the previously reduced torque of the internal combustion engine after the reduction in the torque which can be transmitted by the clutch.

4. Method according to one of Claims 1 to 3, **characterized in that** the electric motor provides a torque which has the same sign as the torque of the internal combustion engine still to be reduced for the transfer of load by the electric motor after performing a gear change before the reduction in load at the internal combustion engine.

5. Method according to Claim 4, **characterized in that** the electric motor also provides a torque which has the same sign as the torque of the internal combustion engine still to be reduced before the build-up in the torque which can be transmitted by the clutch.

6. Method according to one of Claims 1 to 5, **characterized in that** no transfer of load is performed by the electric motor before performing a gear change and after performing a gear change when the charging state of the electric energy store is lower than the threshold value.

7. Method according to one of Claims 1 to 6, **characterized in that** a driver's input is monitored and a transfer of load is carried out by the electric motor before performing a gear change and/or after performing a gear change only when no sporty or spontaneous gear changes are desired.

8. Method according to one of Claims 1 to 6, **characterized in that** no transfer of load is performed by the electric motor before performing a gear change and after performing a gear change when sporty or spontaneous gear changes are desired.

## Revendications

1. Procédé pour faire fonctionner une chaîne cinématique d'un véhicule automobile, la chaîne cinématique comprenant au moins un entraînement hybride avec un moteur à combustion interne et un moteur électrique, un embrayage monté entre le moteur à combustion interne et le moteur électrique et une boîte de vitesses automatique disposée entre l'entraînement hybride et une prise de force, l'embrayage monté entre le moteur à combustion interne et le moteur électrique étant ouvert pour effectuer une commutation avec interruption de la force de traction après une diminution de charge appliquée au moteur à combustion interne et après une diminution du couple pouvant être transmis par l'embrayage monté entre le moteur à combustion interne et le moteur électrique, ensuite, un changement de vitesse étant effectué par la boîte de vitesses automatique avec une synchronisation active par modification du couple fourni par le moteur électrique, et ensuite le couple pouvant être transmis par l'embrayage monté entre le moteur à combustion interne et le moteur électrique étant augmenté, une augmentation de la charge appliquée au moteur à combustion interne étant effectuée, et éventuellement l'embrayage monté entre le moteur à combustion interne et le moteur électrique étant fermé, une reprise de la charge par le moteur électrique étant effectuée avant la réalisation d'un changement de vitesse dans la boîte de vitesses automatique et/ou après la réalisation d'un changement de vitesse dans la boîte de vitesses automatique, **caractérisé en ce que** la reprise de la charge a lieu lorsqu'un état de charge surveillé d'un accumulateur d'énergie électrique de la chaîne cinématique est supérieur à une valeur limite, l'énergie qui est requise pour la synchronisation par le moteur électrique, devant être effectuée lors du changement de vitesse dans la boîte de vitesses automatique, étant prise en compte pour la valeur limite.

2. Procédé selon la revendication 1, **caractérisé en ce que** pour la reprise de la charge par le moteur électrique avant la réalisation d'un changement de vitesse après la diminution de la charge au niveau du moteur à combustion interne, le moteur électrique fournit un couple qui présente le même signe que le couple du moteur à combustion interne préalablement réduit.

3. Procédé selon la revendication 2, **caractérisé en ce qu'**après la diminution du couple pouvant être transmis par l'embrayage, le moteur électrique fournit aussi un couple qui présente le même signe que le couple du moteur à combustion interne préalablement réduit.

4. Procédé selon l'une quelconque des revendications 1 à 3, **caractérisé en ce que** pour la reprise de la charge par le moteur électrique après la réalisation d'un changement de vitesse avant l'augmentation de la charge au niveau du moteur à combustion interne, le moteur électrique fournit un couple qui présente le même signe que le couple du moteur à combustion interne qui va être augmenté.

5. Procédé selon la revendication 4, **caractérisé en ce qu'**avant l'augmentation du couple pouvant être transmis par l'embrayage, le moteur électrique fournit aussi un couple qui présente le même signe que le couple du moteur à combustion interne qui va être augmenté.

6. Procédé selon l'une quelconque des revendications 1 à 5, **caractérisé en ce que** lorsque l'état de charge de l'accumulateur d'énergie électrique est inférieur à la valeur limite, avant la réalisation d'un changement de vitesse et après la réalisation d'un changement de vitesse, il ne se produit aucune reprise de charge par le moteur électrique.

7. Procédé selon l'une quelconque des revendications 1 à 6, **caractérisé en ce qu'**un souhait du conducteur est surveillé et **en ce qu'**une reprise de la charge par le moteur électrique n'a lieu que lorsqu'aucun changement de vitesse sportif ou spontané n'est souhaité, avant la réalisation d'un changement de vitesse et/ou après la réalisation d'un changement de vitesse.

8. Procédé selon l'une quelconque des revendications 1 à 6, **caractérisé en ce que** lorsqu'un changement de vitesse sportif ou spontané est souhaité, avant la réalisation d'un changement de vitesse et après la réalisation d'un changement de vitesse, aucune reprise de la charge par le moteur électrique n'a lieu.
